# EUROPÄISCHE PATENTSCHRIFT

(11) **EP 0 853 801 B1**
(45) Veröffentlichungstag und Bekanntmachung des Hinweises auf die Patenterteilung: **18.06.2003**
(21) Anmeldenummer: 96944568.3
(22) Anmeldetag: 01.10.1996
(51) Int. Cl.: G09F 3/04, B29C 65/00

(54) **DEKOPACK MIT ULTRASCHALLNAHT**
DECORATIVE PACKAGE WITH ULTRASOUND-PRODUCED WELDS
EMBALLAGE DECORE AVEC SOUDURES REALISEES PAR ULTRASONS

(30) Priorität: 02.10.1995 DE 19536749; 04.10.1995 DE 19536991; 05.02.1996 DE 19604063
(43) Veröffentlichungstag der Anmeldung: 22.07.1998
(73) Patentinhaber: RPC Containers Ltd., Raunds, Northants NN9 6ED (GB)
(72) Erfinder: BORGARDT, Bernhard, D-27432 Bremervörde (DE)
(74) Vertreter: Leonhard, Frank Reimund, Dipl.-Ing.
(86) Internationale Anmeldenummer: DE9601894
(87) Internationale Veröffentlichungsnummer: WO97013236

(56) Entgegenhaltungen:
- DE-A- 3 730 894
- DE-A- 4 421 465
- FR-A- 2 602 487
- FR-A- 2 696 263
- US-A- 4 474 637

## Beschreibung

Das technische Gebiet der Erfindung sind die tiefgezogenen Kunststoffverpackungen, speziell Becher mit rechteckförmiger Gestalt (Kunststoffschalen), die ein Bild oder eine optische Verschönerung auf der Außenseite tragen. Die Erfindung betrifft dabei sowohl den mit dem Schmucketikett versehenen Kunststoffbehälter als auch ein Verfahren zum klebstofffreien Anbringen eines Etiketts an einem nicht-bedruckten Behälter.

Tiefgezogene Kunststoffverpackungen werden heute überwiegend nach dem Trockenoffset/Rundumdruck-Verfahren bearbeitet und damit dekoriert. Diese Art des Bedruckens ist relativ preiswert, die Qualität läßt allerdings einige Wünsche offen. Eine bessere Druck-Qualität kann von Etiketten bereitgestellt werden, die mit einem Klebstoff vollflächig an der Kunststoffverpackung befestigt werden. Eine weitere Möglichkeit ist die Technik des Inmould-Labelings (IML). Bei Flaschen ist bislang nur mit Klebstoff-Verfahren gearbeitet worden, um das Etikett leicht lösbar an der Flasche anzubringen, so daß die Flasche nach dem Lösen des Etiketts wiederverwendbar ist (vgl. **DE-A 34 42 998**, dort Figur 3 und Spalte 3, Zeile 49ff.)

Per Klebstoff aufgebrachte Etiketten an Kunststoffschalen sind dauerhaft und unlösbar mit der Kunststoffschale verbunden. Das hat Nachteile dann, wenn Etikett und Kunststoffverpackung nicht aus demselben Werkstoff gefertigt sind, weil ein beispielsweise aus Papier bestehendes Etikett nicht mehr von einer Kunststoffverpackung gelöst werden kann. Daneben sind Selbstklebeetiketten sehr teuer in der Herstellung, sie sind zwar optisch durchaus ansprechend gestaltet und von der Druck-Qualität her hervorragend, die Kosten beeinträchtigen aber ein solches Dekorieren einer Verpackung. Das IML-Verfahren senkt die Kosten, benötigt allerdings zur Herstellung mehr Zeit, so daß eine Kapazitätseinbuße hingenommen werden muß. Daneben verliert beim IML das Etikett durch die Temperatureinwirkung beim Aufbringen seine anfänglich noch hervorragende Oberflächenqualität.

Aus der **FR-A 2 602 487** (Verreries) ist es bekannt, zwei Arten von Etiketten auf einem Kunststoffbehälter anzuordnen, ein Banderolenetikett und ein darauf liegendes zweites Etikett, das mit einer praktisch umlaufenden Schweißlinie (dort 11, Figur 2) befestigt wird. Es wird an einer Stelle dieses Dokumentes erwähnt (Seite 4, Zeilen 6 bis 9), daß Punkte oder Linien aus Ultraschall zum Befestigen der Banderole eingesetzt werden können, aber es ist nicht erkennbar, wo diese Punkte oder Linien an der Banderole anzuordnen sind, die sehr großflächig ausgestaltet ist.

Die Erfindung geht demgemäß **von der Aufgabe aus**, ein schnell arbeitendes Verfahren vorzuschlagen, mit dem das Dekorieren oder das Kennzeichnen von Kunststoffverpackungen in ihrer Qualität (insbesondere in ihrem optischen Erscheinungsbild der dekorierten Verpackungen) verbessert werden kann, wobei gleichzeitig die Kosten nicht oder nur geringfügig gegenüber den Kosten des Trockenoffset-Verfahrens erhöht sein sollen.

Das wird erreicht, wenn das Etikett mit Ultraschall-Schweißstellen auf der Kunststoffverpackung angeheftet wird, wobei die beabstandeten Schweißstellen linienförmig aneinandergereiht sind und insgesamt eine Fläche haben, die sehr viel geringer ist als die Fläche des anzubringenden Etiketts (Anspruch 1). Die Schweißstellen-Linie kann nahe des oberen oder unteres Randes des Etiketts plaziert sein (Anspruch 2).

Beim Verfahren, mit dem klebstofffrei ein Etikett auf einer Kunststoffverpackung befestigt werden kann und das zu der erwähnten Packung führt, wird das Etikett an die Form der Kunststoffverpackung angepaßt oder ist bereits an sie angepaßt worden und das an die Kunststoffverpackung angelegete Etikett wird an einer Vielzahl von klebstofffreien Verbindungsstellen (Haft- oder Heftstellen) mit Ultraschall und Kraft an den Kunststoffbehälter angeheftet (Anspruch 10).

Eine Vorrichtung zur Durchführung des erwähnten Verfahrens oder zur Herstellung des erwähnten Behälters besteht aus einem inneren und einem äußeren Werkzeugteil, die an der Innenseite und der Außenseite einer jeweiligen Behälterwandung des Kunststoffbehälters anlegbar sind. Aus einem der Werkzeugteile ragen mehrere Sonotroden federbelastet heraus oder werden herausgefahren, die Druck und Ultraschall auf die Fläche des Etiketts jeweils punktförmig aufzubringen vermögen. Das Etikett wird mit der Herstellvorrichtung nahtförmig an der Kunststoffverpackung angeheftet, die Dauer oder Amplitude, mit der eine jeweilige Heftstelle unter Ultraschall-Einwirkung steht, ist vorteilhaft einstellbar, um der Form der Schale Rechnung zu tragen.

Mit der Erfindung wird das Etikett ohne Klebstoff auf der Kunststoffverpackung aufgebracht. Das Etikett kann aus Polystyren oder Polypropylen bestehen, ebenso wie die Kunststoffverpackung selbst (Anspruch 4). Die Ultraschall-Verbindung erfolgt auf einem nur kleinen Bereich des Gesamtetiketts, so daß das Etikett zwar fest und dauerhaft mit der Kunststoffverpackung verbunden ist, von ihr aber auch durch Abscheren oder -ziehen leicht gelöst werden kann, wenn man bei einer Entsorgung der Kunststoffverpackung das Etikett entfernen möchte, das nicht aus demselben Werkstoff oder einem vergleichbaren Werkstoff besteht (Anspruch 9).

Die Qualität des angehefteten Etiketts wird durch die Anbringung nicht oder nur unmerklich beeinflußt, namentlich nur an den Ultraschall-Heftstellen, die in ihrem Ausmaß vernachlässigbar klein sind, während der Großteil der Etikettfläche unverändert bleibt, nicht durch Wärme oder Druck beeinflußt oder verändert wird und auch nicht mittels teuerer Klebefolie an der Wandung des Kunststoffbehälters angeklebt zu werden braucht (Anspruch 6).

Die Erfindung ermöglicht es, die Dauer oder die Intensität der Ultraschall-Einwirkung zu variieren, um das Anheftungsverfahren an verschiedene Wandstärken des Kunststoffbehälters anzupassen.

Werden viele Sonotroden (Ultraschall-Übertragungsstifte, mit denen Druck und Schallschwingungen gleichzeitig auf die Nahtstelle aufgebracht werden) gleichzeitig zur Einwirkung gebracht, so wird die Geschwindigkeit des Anheftungsverfahrens sehr groß und die Kapazität der Maschinen zum Dekorieren von Verpackungen kann erhöht werden. Selbst wenn alle Sonotroden gleichzeitig Ultraschall und Druck auf das anzuheftende Etikett und die Behälterwandung aufbringen, kann durch unterschiedliche Länge oder Dauer von einzelnen oder Gruppen von Sonotroden eine Anpassung an die Wandstärken erfolgen; die Dauer des Anheftvorganges ist dann bestimmt durch die Sonotrode, die die längste Ultraschall-Einwirkungsdauer benötigt. Sie liegt an der Stelle der Verpackung an, an der die größte Wandstärke vorliegt.

Die Sonotroden werden federbelastet, so daß eine selbsttätige Aufbringung von Druck bei Anfahren des äußeren Werkzeugteiles an die Außenwandung und bei Abstützung der Innenwandung des Kunststoffbehälters am Amboß möglich wird.

Das "Annähen" der Etiketten durch punktförmige Schweißstellen ermöglicht also innerhalb von kurzer Zeit eine auf Dauer angelegte Verbindung, die in überraschender Weise noch leicht gelöst werden kann. "Punktförmig" ist dabei nicht als streng kreisförmig zu verstehen, es können auch ovale oder quadratische Heftstellen sein. Punktförmige Heftstellen qualifiziert mehr den Unterschied zum flächigen Etikett (Anspruch 11, Anspruch 14, Anspruch 2, Anspruch 3, Anspruch 7).

Die Etiketten können aus dünnen Kunststoff-Folien oder beschichtetem Papier bestehen. Alle bekannten Druckverfahren - wie Offset oder Tiefdruck - sind einsetzbar. Das Anbringungsverfahren beeinflußt die Qualität der Etiketten nicht. Als Träger für die Etiketten eignen sich Papier oder dünne Kunststoff-Folien. Papieretiketten sollten mit einem dem Bechermaterial entsprechenden Kunststoff beschichtet sein.

Kunststoffverpackung kann sowohl der Unterteil (Schale, Becher), als auch der tiefgezogene oder gespritzte Deckel sein; auch beides ist möglich.

Nach Anlegen des Etiketts an die Kunststoffverpackung, vorzugsweise durch eine umlaufende Banderole mit einer Längs-Nahtstelle an der Überlappungsstelle und einer obenliegenden und einer untenliegenden Quer-Umlaufnaht, wird das Außenteil (der Sonotroden-Träger) der Herstellvorrichtung angenähert, der innenliegende Amboß ist schon in dem schalenförmigen Behälter vorgesehen oder wird gleichzeitig eingefahren. Die federbelasteten Sonotroden drücken sich auf das Etikett auf und stellen durch ihre Federbelastung eine Druckkraft ein, die die Übertragung von Ultraschall-Schwingungen zur Schweißverbindung ermöglicht. Die Federbelastung erlaubt es, die Sonotroden an unterschiedliche Wandstärken eigenständig anzupassen; die Anpassung der Intensität der Schweißnaht wird durch Dauer und/oder Amplitudeneinstellung der Ultraschallschwingungen ermöglicht.

Alle Sonotroden wirken beim Herstellverfahren von allen Seiten gleichzeitig auf die Verpackung ein, so kann die größte Herstellungsgeschwindigkeit erreicht werden.

Mit der Schweißpunkt-Nahtstelle nahe beider Längsränder des Etiketts wird auch eine überraschend plane Anbringung erreicht; Knick- und Knitterstellen, die bei vollflächigem Kleben oft entstehen, werden vermieden.

Die Erfindung(en) werden nachfolgend anhand mehrerer Ausführungsbeispiele erläutert und ergänzt.
- **Figur 1**: zeigt ein Beispiel eines mit einer Dekorationsfolie 20 versehenen Kunststoffbehälters 10 in Schalenform, wie er für die Verpackung von Eis oder Margarine verwendet werden kann.
- **Figur 2**: zeigt eine Ausschnittsvergrößerung einer Schweißstelle 21a, im folgenden kurz mit 21 bezeichnet, und der sie erzeugenden Sonotrode 30 mit Amboß 31, der hier stumpfförmig dargestellt ist.
- **Figur 3**: ist ein Beispiel einer plan auf einem Träger aufgebrachten Dekorations-Folie 20, die kurz vor der Anheftung auf den Kunststoffbehälter ausgeschnitten und als Banderole um den Kunststoffbehälter 10 gelegt wird, so daß ein (noch ohne Schweißnaht-Punkte 21 versehener) Zustand gemäß Figur 1 entsteht.
- **Figur 4**: ist ein Ausschnitt aus dem Sonotroden-Träger 37 als äußerem Werkzeugteil einer Vorrichtung, mit der eine Vielzahl von Schweißstellen gleichzeitig aufgebracht werden können, um die Banderole 20 gemäß **Figur 3** in einer Weise an dem Kunststoffbehälter 10 anzuheften, wie das die Figur 1 veranschaulicht.

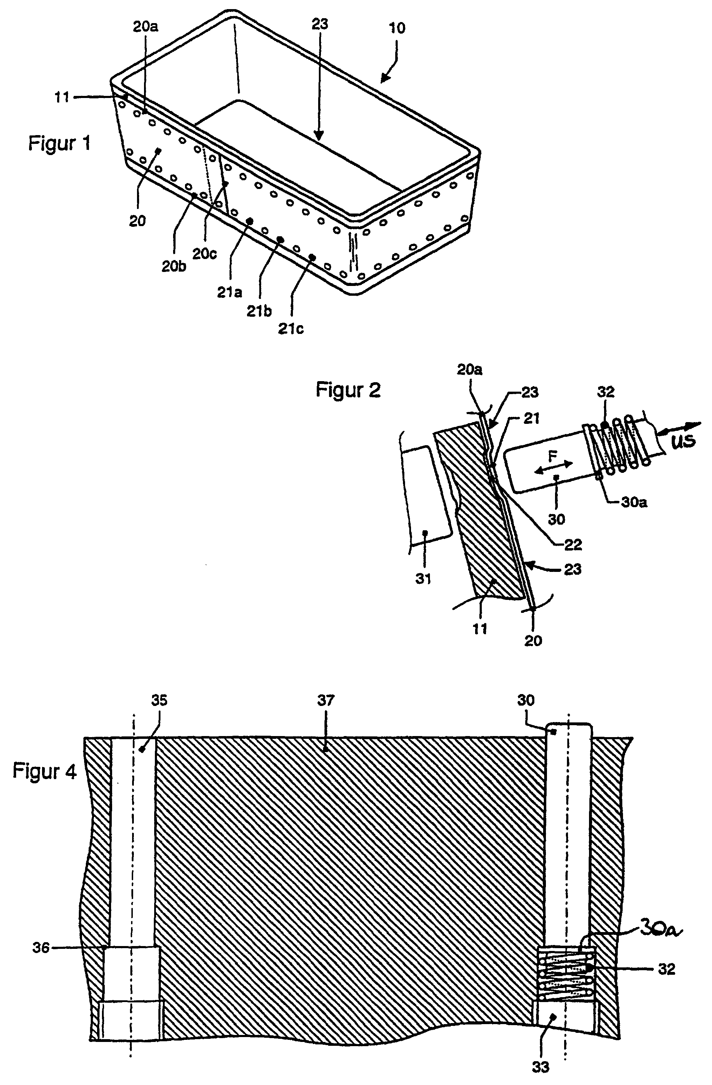

**Figur 1** veranschaulicht einen Kunststoffbehälter in Rechteckform, der eine an ihm angeheftete Kunststoff-Banderole 20 als Etikett zu seiner Dekoration aufweist. Die Kunststoff-Folie, im Beispiel eine Folie aus PP, ist mit einer Vielzahl von Nahtstellen 21a,21b,21c,... (kurz: 21) an der Außenseite der vier Wandungen 11 angeheftet. Die Heftstellen bilden dabei eine obenliegende linienförmige Naht, eine untenliegende linienförmige Naht und eine kurze Naht, um die Enden der Dekorations-Banderole 20 nahe dem schmalen Rand 20c miteinander und mit der Wandung 11 zu verbinden.

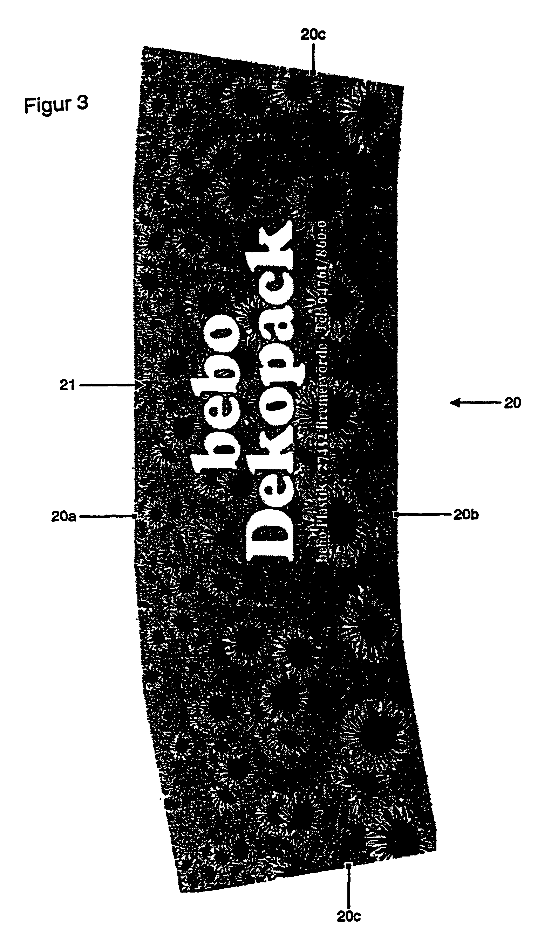

Die Banderole 20 hat einen oberen Rand 20a, hat in **Figur 3** einen unteren Rand 20b und die soeben erwähnten kurzen Enden 20c. Längs aller Ränder und nahe dieser Ränder sind die Schweißstellen 21 vorgesehen und verbinden die Dekorationsfolie fest mit dem Kunststoffbehälter 10.

Nicht dargestellt, **da Figur 1** nur eine schematische Darstellung der Form der Anbringung der Banderole ist, ist die genaue Form des Behälters 10, der in seinen Dimensionen, in seiner Form und in seinen oberen tiefgezogenen Randbereichen (meist mehrfach gestufte umlaufende Ränder zum Bilden einer lösbaren und wiederverbindbaren Schnappverbindung mit einem nicht dargestellten Deckel) abhängt von den Nahrungsmitteln, mit denen er befüllt wird.

Die Banderole hat von der Oberkante des Behälters und von der Unterkante des Behälters einen deutlichen Abstand, die Schweißstellen 21, die durch Ultraschall-Verbindungen zustande kommen, sind aber nur gering von den Rändern 20a,20b und 20c beabstandet, so daß der freiliegende Randbereich 23 nur kurz ist.

**Figur 2** verdeutlicht die Entstehung einer Schweißnahtstelle 21, die durch Anlegen einer Sonotrode 30 an dem Etikett 20 und durch Abstützen der Innenseite der Wandung 11 an einem Gegenlager 31 (sogenannter Amboß) gebildet wird. Die Sonotrode 30 hat einen Kragen 30a, an dem eine Feder 32 anliegt, die eine Kraft F auf die Stirnseite der Sonotrode (Schallschwingungen übertragender langgestreckter Stift) aufzubringen vermag. Die Neigung der Wand 11 in **Figur 2** orientiert sich an der Neigung der Wand gemäß **Figur 1**; die Sonotrode 30 kann sowohl von innen einwirken, dann ist der Amboß 31 außenliegend; die Sonotrode 30 kann aber auch von außen am Etikett 20 anliegen (wie das in der **Figur 2** dargestellt ist), während der Amboß 31 auf der Innenseite zu liegen kommt

Der Amboß 31 kann ein Stumpen sein, der einen Durchmesser aufweist, der etwas größer als der der stiftförmigen Sonotrode 30 ist. Er kann auch vollflächig ausgebildet sein, so daß er im gesamten Innenraum des Behälters 10 ein Gegenlager für alle Sonotroden 30 bildet.

Die Naht, bestehend aus vielen, gleichmäßig beabstandeten kleinen Schweißpunkten 21, wird durch eine Vielzahl von Sonotroden 30 erreicht, die im gleichen Abstand in einem Sonotroden-Träger 37 gemäß Figur 4 gelagert sind. Aus jeweils einer Aufnahmebohrung 35 ragt die Stirnseite eines Stiftes 30 heraus, der mit einer Feder 32 nach vorne vorgespannt ist. Der Vorspannungs-Vorschub endet an einem Absatz 36, der mit dem Kragen 30a der stiftförmigen Sonotrode 30 als Anschlag zusammenwirkt. Am rückwärtigen Ende jeder Sonotrode 30 ist ein Transformationsstück 33 vorgesehen, das die mechanische Schwingungsenergie US von einem Hochfrequenz-Generator (in der Regel oberhalb von 20 kHz bis etw 50 kHz Schallschwingungen) auf die von der Sonotrode benötigte Schwingungsamplitude transformiert.

Mit dieser Gestaltung wird die Kraft F und die Ultraschall-Schwingung US gleichzeitig auf die Stirnseite des Sonotroden-Sfsftes aufgebracht, der an der Dekorations-Folie 20 anliegt.

Die vielen in gleichmäßigem Abstand voneinander vorgesehenen stiftförmigen Sonotroden in dem Träger 37 wirken gleichzeitig auf das Etikett ein und erzeugen eine umlaufenden Naht am oberen und am unteren Rand der Dekorations-Folie 20. Das Werkzeug hierzu ist nur ausschnittsweise in der **Figur 4** dargestellt. Das vollständige Werkzeug weist zum Beispiel vier Blöcke von Sonotroden-Trägem auf, die von den vier Außenseiten gegen die Kunststoffverpackung angestellt werden, in der sich das einoder mehrteilige Gegenlager 31 befindet

Alle Schweißnahtstellen werden so gleichzeitig (zeitsparend) hergestellt.

Die eigentliche Verbindung zwischen dem Dekorations-Etikett 20 und der Wand 11 entsteht in einem Bereich 22, der direkt unter dem Zentrum der Stirnseite der Sonotrode 30 liegt. An dieser Stelle entsteht durch die Ultraschall-Schwingungen US bei gleichzeitiger Einwirkung von mechanischer Federkraft F eine Aufweichung des Kunststoff-Materials und nach Abkühlung eine feste Verbindungsstelle.

Die Verbindungsstellen sind in ihrem flächigen Ausmaß allerdings sehr klein gering gegenüber der Gesamtfläche des Etiketts, so daß das Etikett 20 am Großteil seiner Fläche 23 nicht mit der Kunststoffverpackung 10 bzw. deren Wand 11 verbunden ist. Das ermöglicht eine leichte Lösbarkeit des Etiketts, wenn es an dem einen schmalen Rand 20c ergriffen und umlaufend abgeschert wird. Alle Nahtstellen 21 lösen sich dabei leicht, so daß Etikett und Behälter getrennt entsorgt werden können. Auf der anderen Seite ist die Nahtstelle auf Dauer angelegt, sie ist besonders vorteilhaft kälteunempfindlich und läßt sich auch von Lösungsmitteln oder anderen Flüssigkeiten nicht in ihrer Haltewirkung beeinträchtigen. Schließlich ist auch eine mäßige Erwärmung schadlos für die dauerhafte Verbindung, solange sie deutlich unterhalb einer Temperatur liegt, bei der das Etikett noch nicht plastisch verformbar ist.

Ein Beispiel einer Folie 20 ist in **Figur 3** abgebildet. Der Dekorationsteil eines Folienbandes ist in seiner geometrischen Form an die Form des Kunststoffbehälters 10 angepaßt, namentlich abhängig von der Neigung und der Länge der Wandungen 11. Das Etikett 20 ist zum Beispiel im Offset-Druckverfahren hergestellt worden, es weist eine optisch ansprechende und qualitativ hochwertige Oberfläche auf. Nach Ausstanzen oder Ausschneiden des Etiketts wird es um den Kunststoffbehälter 10 herumgelegt und zunächst temporär gehalten, bis der Sonotrodenträger 37 von allen Seiten gegen das Etikett 20 angestellt wird, um mit Schallschwingungen US und Druck F die Nahtstellen am oberen Rand 20a und unteren Rand 20b sowie an dem kurzen vertikalen Rand 20c anzubringen.

## Patentansprüche

1. **Verpackung** mit einem Behälter aus Kunststoff und einem lösbar daran angeordnetem Schmucketikett, bei welcher Verpackung
(a) das Etikett (20) mittels Ultraschall (21a,21b,21c,... kurz: 21) an der Wand (11) des Behälters (10) angebracht ist;
**dadurch gekennzeichnet, daß**
(b) eine Vielzahl von linienförmig aufgereihten Schweißstellen (21) das Schmucketikett (20) nahe dessen Rand an der Wand (11) des Behälters (10) fixieren und dabei die vielen Schweißstellen (21) eine Fläche haben, die sehr viel kleiner als die Fläche des Etiketts (20) ist;
(c) die Summe der Durchmesser der Schweißstellen (21) viel kleiner ist als die Länge des oberen bzw. unteren Randes (20a,20b) des Etiketts (20).

2. Verpackung nach Anspruch 1, bei der das Schmucketikett (20) und der Behälter (10) gemeinsam oder getrennt nach Werkstofftyp recyclebar sind.

3. Verpackung nach Anspruch 1 oder 2 bei der
(a) der Abstand der Schweißstellen (21) vom Rand (20a,20b) des Etiketts (20) größer ist als der Durchmesser der Schweißstellen (21); und/oder
(b) der Abstand der Schweißstellen (21) voneinander deutlich größer ist, als der Durchmesser jeder einzelnen Schweißstelle (21a,21b).

4. Verpackung nach einem der vorigen Ansprüche, bei dem das Etikett (20) und der Behälter (10) weitgehend oder vollständig aus demselben Werkstoff bestehen.

5. Verpackung nach einem der vorigen Ansprüche, bei dem das Etikett (20) dünn gegenüber der Wand (11) des Behälters (10) ist.

6. Verpackung nach einem der vorigen Ansprüche, bei der das Etikett (20) im größten Teil (23) seiner flächigen Erstreckung nicht mit dem Behälter (10) oder dessen Wänden (11) verbunden ist.

7. Verpackung nach einem der vorigen Ansprüche, bei der die Schweißstellen (21) im wesentlichen punktförmig ausgebildet sind.

8. Verpackung nach einem der vorigen Ansprüche, bei der der Abstand von Schweißpunkt (21a) zu Schweißpunkt (21b) im wesentlichen gleich und mehr als zehnmal größer als der Durchmesser des jeweiligen Schweißpunktes (21) ist.

9. **Verfahren** zum Fixieren eines vorgedruckten Etiketts (20) aus Kunststoff oder Papier an einer Außenseite eines Behälters (10) aus Kunststoff, bei dem
(a) ein an die Form des Behälters (10) angepaßtes oder anpaßbares dünnes Etikett (20) auf Außenseiten von Wänden (11) des Behälters (10) klebstofffrei angelegt wird;
(b) das angelegte Etikett (20) an Heft- oder Haftstellen als Verbindungsstellen (21a,21b,21c;...;21) durch Ultraschall (US) und Kraft (F) dauerhaft mit dem Behälter (10) verbunden wird,
**dadurch gekennzeichnet, daß**
(c) eine Vielzahl von solchen Verbindungsstellen (21) beabstandet aber unter Ausbildung einer Verbindungsnaht von Heft- oder Haftstellen (21) an einem jeweiligen Rand (20a,20b) des Etiketts (20) oder im leichten Abstand davon angebracht werden und das Etikett dadurch mit den Wänden verbunden wird.

10. Verfahren nach Anspruch 9, bei dem die Dauer der Druck- und Ultraschall-Einwirkung (US,F) auf jede Heft- oder Haftstelle (21) abhängig von der Dicke der Wände (11) und der Dicke des ihnen gegenüber dünneren Etiketts (23) gewählt wird.

11. Verfahren nach Anspruch 9 oder 10, bei dem die Ultraschall-Einwirkung bei gleichzeitigem Einbringen aller Heft- oder Haftstellen (21) an zumindest zwei Stellen des Behälters (10) in ihrer Dauer unterschiedlich lang ist oder in ihrer Intensität unterschiedlich groß ist.

12. Verfahren einem der obigen Verfahrensansprüche, bei dem die Größe der Heftoder Haftstellen (21) sehr klein gegenüber der Fläche des Etiketts (20) ist.

13. Verfahren nach einem der obigen Verfahrensansprüche, bei dem die Heft- oder Haftstellen (21) einen im wesentlichen gleichförmigen Abstand voneinander einhalten und alle Verbindungsstellen (21) gleichzeitig oder große Gruppen von Verbindungsstellen in zwei oder mehr Verfahrensschritten angebracht werden.

14. Verfahren nach einem der vorigen Verfahrensansprüche, bei dem die Heft- oder Haftstellen in ihrem Durchmesser klein gegenüber der Länge der oberen, unteren oder seitlichen Ränder (20a,20b) des Etiketts (20) gewählt werden.

## Claims

1. **Packaging** with a container of plastics material and a decorative label detachably arranged on it, in which packaging
(a) the label (20) is attached by means of ultrasound (21a, 21b, 21c, ... briefly : 21) to the wall of the container (10);
**characterised in that**
(b) a multiplicity of welding positions (21) arranged in a row in a linear form fix the decorative label (20) close to its edge to the wall (11) of the container (10) and thereby the many welding positions (21) have a surface, which is very much smaller than the surface of the label (20);
(c) the sum of the diameters of the welding positions (21) is very much smaller than the length of the upper or lower edge (20a, 20b) of the label (20).

2. Packaging according to claim 1, in which the decorative label (20) and the container (10) are recyclable together or separated in accordance with the type of material employed.

3. Packaging according to claim 1 or claim 2 in which
(a) the distance of the welding positions (21) from the edge (20a, 20b) of the label (20) is larger than the diameter of the welding positions (21); and/or
(b) the distance of the welding positions (21) from each other is significantly larger than the diameter of each individual welding position (21a, 21b).

4. Packaging according to one of the foregoing claims, in which the label (20) and the container (10) largely or completely comprise the same material.

5. Packaging according to one of the foregoing claims, in which the label (20) is thin in comparison with the wall (11) of the container (10).

6. Packaging according to one of the foregoing claims, in which the label (20) is not joined to the container (10) or to its walls (11) over the major part (23) of its surface extension.

7. Packaging according to one of the foregoing claims, in which the welding positions (21) are essentially formed as spots.

8. Packaging according to one of the foregoing claims, in which the distance from the welding point (21a) to the welding point (21b) is essentially the same and more than 10 times larger than the diameter of the individual welding spots (21).

9. **A Method** for fixing a pre-printed label (20) of plastics material or paper to the outer side of a container (10) of plastics material, in which
(a) a thin label (20) matched to the shape of the container (10) or adaptable to it is attached without adhesive;
(b) the attached label (20) is joined permanently to the container (10) at attachment or retaining positions as connecting positions (21a, 21b, 21c:...: 21) by ultrasound (US) and force (F)
**characterised in that**
(c) a multiplicity of such connecting positions (21) separated from each other but forming a connecting seam of attachment or retaining positions (21) on an individual edge (20a, 20b) of the label (20) or at a small distance from it are applied and the label is joined with the walls thereby.

10. A method according to claim 9, in which the duration of the pressure and ultrasound effect (US, F) on each attachment or retaining position (21) is selected depending on the thickness of the walls (11) and the thickness of the relatively thinner label (23) to them.

11. A method according to claim 9 or claim 10, in which the ultrasound effect in the simultaneous application of all attachment or retaining positions (21) is differentially great in its intensity or in its duration at at least two positions of the container (10).

12. A method according to any of the above method claims, in which the size of the attachment or retention positions (21) is very small as opposed to the surface of the label (20).

13. A method according to any of the above method claims, in which the attachment or retaining positions (21) maintain an essentially uniform distance from each other and all the connecting positions (21) are attached at the same time or large groups of connecting positions are attached in two or more stages of the method.

14. A method according to one of the previous method claims, in which the attachment or retaining positions are selected to be smaller in diameter as opposed to the length of the upper, lower or side edges (20a, 20b) or the label (20).

## Revendications

1. Emballage avec un récipient en matière plastique et une étiquette décorative disposée de manière amovible sur ce dernier, emballage dans lequel
(a) l'étiquette (20) est fixée au moyen d'ultrasons (21a, 21b, 21c,... en résumé : 21) à la paroi (11) du récipient (10) ;
**caractérisé**
(b) en ce qu'une pluralité de zones de soudure (21) disposées en ligne fixent l'étiquette décorative (20), à proximité du bord de cette dernière, à la paroi (11) du récipient (10), les nombreuses zones de soudure (21) présentant une surface beaucoup plus petite que la surface de l'étiquette (20) ;
(c) en ce que la somme des diamètres des zones de soudure (21) est beaucoup plus petite que la longueur du bord supérieur ou inférieur (20a, 20b) de l'étiquette (20).

2. Emballage selon la revendication 1, dans lequel l'étiquette décorative (20) et le récipient (10) peuvent être recyclés, ensemble ou bien séparément suivant le type de matériau.

3. Emballage selon la revendication 1 ou 2, dans lequel
(a) la distance entre les zones de soudure (21) et le bord (20a, 20b) de l'étiquette (20) est plus grande que le diamètre des zones de soudure (21) ; et/ou
(b) la distance entre chaque zone de soudure (21) est nettement plus grande que le diamètre de chaque zone de soudure (21a, 21b).

4. Emballage selon l'une des revendications précédentes, dans lequel l'étiquette (20) et le récipient (10) sont majoritairement ou intégralement constitués du même matériau.

5. Emballage selon l'une des revendications précédentes, dans lequel l'étiquette (20), par rapport à la paroi (11) du récipient (10), est mince.

6. Emballage selon l'une des revendications précédentes, dans lequel la plus grande partie (23) de la surface de l'étiquette (20) n'est pas assemblée au récipient (10) ni aux parois (11) de ce dernier.

7. Emballage selon l'une des revendications précédentes, dans lequel les zones de soudure (21) sont essentiellement formées de points.

8. Emballage selon l'une des revendications précédentes, dans lequel la distance d'un point de soudure (21a) à un autre point de soudure (21b) est principalement identique, et plus de dix fois supérieure au diamètre de chaque point de soudure (21).

9. Procédé destiné à fixer une étiquette pré-imprimée (20) en matière plastique ou en papier à un côté extérieur d'un récipient (10) en matière plastique, par lequel
(a) une étiquette (20) mince, adaptée ou pouvant être adaptée à la forme du récipient (10), est apposée sans colle sur des côtés extérieurs de parois (11) du récipient (10) ;
(b) l'étiquette apposée (20) est assemblée de manière permanente au récipient (10), au niveau de zones de pointage ou d'adhérence servant de zones d'assemblage (21a, 21b, 21c ;... ; 21), par ultrasons (US) et contrainte (F) ;
**caractérisé**
(c) en ce qu'une pluralité de zones d'assemblage (21) de ce type, espacées mais constituant un cordon de zones de pointage ou d'adhérence (21), sont appliquées au niveau d'un bord respectif (20a, 20b) de l'étiquette (20) ou à légère distance de celui-ci, l'étiquette étant ainsi assemblée aux parois.

10. Procédé selon la revendication 9, dans lequel la durée d'action de la contrainte et des ultrasons (US, F) sur chaque zone de pointage ou d'adhérence (21) est choisie en fonction de l'épaisseur des parois (11) et de l'épaisseur de l'étiquette (23), plus mince par rapport à ces dernières.

11. Procédé selon la revendication 9 ou 10, par lequel l'action des ultrasons, parallèlement à l'application simultanée de toutes les zones de pointage ou d'adhérence (21), est d'une durée différente ou d'une intensité différente en deux endroits au moins du récipient (10).

12. Procédé selon l'une des revendications ci-dessus pour un procédé, par lequel la taille des zones de pointage ou d'adhérence (21) est beaucoup plus petite que la surface de l'étiquette (20).

13. Procédé selon l'une des revendications ci-dessus pour un procédé, par lequel les zones de pointage ou d'adhérence (21) sont à une distance principalement égale les unes des autres, et par lequel toutes les zones d'assemblage (21) sont appliquées en même temps ou bien le sont, de façon regroupée, en deux ou plusieurs étapes.

14. Procédé selon l'une des revendications précédentes pour un procédé, par lequel le diamètre choisi pour les zones de pointage ou d'adhérence est plus petit que la longueur des bords supérieurs, inférieurs ou latéraux (20a, 20b) de l'étiquette (20).
